# EUROPEAN PATENT APPLICATION

(11) **EP 1 134 828 A1**
(43) Date of publication of application: **19.09.2001**
(21) Application number: 99935143.0
(22) Date of filing: 30.07.1999
(51) Int. Cl.: H01M 4/64, H01M 4/66, H01M 10/40, C23F 1/00, C23G 1/00

(54) **METHOD FOR TREATING METALLIC ALUMINIUM AND COPPER CURRENT COLLECTOR FOR SECONDARY CELL**

(30) Priority: 31.07.1998 KR 9830998
(71) Applicant: Finecell CO. LTD., Sungnam-City, Kyung ki-Do 463-070 (KR); Jang, Dong Hun, Sungnam-city, Kyungki-do 463-070 (KR); Kim, Sa Heum, Koyang-City, Kyungki-do 441-371 (KR); Hong, Young Jin, Gwangju-gun, Kyungki-do 464-890 (KR); Kim, Han Jun, Seoul 122-012 (KR)
(72) Inventor: JANG, Dong, Hun, 810-1104, Jangmi Hyundai Apt., Sungnam-city, Kyungki-do 463-070 (KR); KIM, Sa, Heum, 405-1603, Gangsun Maeul, Koyang-City, Kyungki-do 441-371 (KR); HONG, Young, Jin, 102-301 Sanhagreen Villa, Gwangju-gun, Kyungki-do 464-8 (KR); KIM, Han, Jun, Seoul 122-012 (KR); LEE, Sung, Keun, 807-1102 Jangmi Hyundai Apt. 334, Sungnam-city, Kyungki-do 463-070 (KR)
(74) Representative: Moinas, Michel
(86) International application number: KR9900412
(87) International publication number: WO0007253

(57) **Abstract**

Aluminum and copper current collectors for rechargeable lithium batteries are treated with aqueous acidic or basic solution, or neutral aqueous solution and subsequently, the conductive mixture layer may be formed on their surface to increase its surface area and to enhance its adhesion property with active material layer. The current collectors treated according to the present invention make the rechargeable battery have a good cycle life and charge/discharge performance.

## Description

### FIELD OF INVENTION

The present invention is related to the treatment method to improve the properties of metallic current collectors for electrodes of rechargeable batteries, particularly, rechargeable lithium batteries.

### BACKGROUND OF THE INVENTION

In rechargeable batteries, the current collectors provide the pathway for electrons movement. Usually, an aluminum current collector is used for the cathode, and a copper current collector is used for the anode in rechargeable batteries. However, the surface area of current collector is not large sufficiently and the processibility with active material layer is poor, and additionally, the shape of electrode is broken down by repeated volume change of active material during the charge/discharge steps; consequently, the cycle performance of the battery may decrease. Considering the general electrode manufacturing process, the active material layer is made by direct coating the mixed slurry, which is comprised of active material, conducting additives and binder, on the metallic current collector and drying, or by laminating or roll pressing the active material sheet, which is separately made by coating and drying, with the metallic current collector.

In these processes, the processibility of electrode shall decrease if the current collector has the low surface area and poor adhesion property. In addition, the active material layer may be separated from the current collector because the volume of active material is continuously changed during the repeated charge/discharge steps. In this case, the battery performance shall be deteriorated. The detachment between the current collector and the active material brings about blocking the flow of electron and the electrochemical reaction; consequently, it results in the decreased battery capacity.

Additionally, there is the problem that the surface of current collector shall be continuously deteriorated. The current collector is surrounded with the oxidation environment during and after the battery manufacturing process. That is, the surface of current collector may be continuously oxidized and dissolved by a liquid electrolyte or the other conditions during the manufacturing process. And, the repeated charge/discharge steps may make the surface of current collector deteriorate more intensively. The surface deterioration of current collector shall mean the deterioration of interface between the current collector and the active material layer. Therefore, the current collector shall be necessarily developed that has a large surface area, stable surface state and excellent adhesion property, and maintains its shape and mechanical strength.

### DISCLOSURE OF THE INVENTION

In the battery manufacturing process, various technologies are necessarily demanded for rechargeable battery, in particular, for rechargeable lithium battery industries, such as the enhanced processibility between the current collector and the active material slurry or the active material sheet, the higher manufacturing yield, the shape stability of electrode during the repeated charge/discharge steps and the stabilized surface of current collector. Therefore, the object of the present invention is to provide the methods for treatment of the metallic current collectors for rechargeable battery, in particular, for rechargeable lithium batteries. Consequently, the current collectors, preferably aluminum and copper, maintain their adhesion properties. Additionally, their processiblity with the active material layer increases and the electrode made with them maintains its shape during the repeated charge/discharge steps.

### BRIEF DESCRIPTION OF DRAWINGS

Figure 1 shows the surface area characteristics of aluminum current collector according to the present invention with treatment time;
Figure 2 shows the scanning electron microscopy of aluminum current collector treated with neutral aqueous solution according to the present invention;
Figure 3 shows the comparison graph of the discharge capacity change of cathodes at the constant current charge/discharge experiment of rechargeable lithium batteries, wherein one of them was made with untreated aluminum current collector and the others were made with treated aluminum current collector on which conductive mixture layer was formed;
Figure 4 shows the comparison graph of the discharge capacity change of anodes at the constant current charge/discharge experiment of rechargeable lithium batteries, wherein one of them was made with untreated copper current collector and the others were made with treated copper current collector on which conductive mixture layer was formed.

### PREFERREED EMBODIMENTS OF THE INVENTION

The present invention relates to the metallic current collector, preferably, aluminum and copper current collector treated with the neutral, acidic or basic aqueous solution to increase its surface area. More specifically, the current collectors for rechargeable battery are treated by reacting with the neutral, acidic or basic aqueous solution between 0 to 100°C for not more than an hour, and washing with pure water.

The shape of said metallic current collectors, preferably, aluminum and copper shall not be limited to particular one. Any kind of shape suitable for the battery performance and the manufacturing process can be used. Particularly, foil, punched foil, etched foil and expanded metal can be used preferably.

Prior to said treatment step, the impurities on the surface of current collector may be removed. The heat treatment method and/or washing method with solvent can be used to remove the impurities. The heat treatment method is done by drying the current collector at the temperature of between 100 to 400°C for 30 minutes to 4 hours. If the temperature is lower than 100°C or the treatment time is shorter than 30 minutes, the impurities may not be removed sufficiently. And, if the temperature is higher than 400°C or the treatment time is longer than 4 hours, the impurities may be removed sufficiently but the surface of metallic current collector may be destroyed. Both of the two methods can be applied in some cases and, if not necessary, all of them may be omitted. Its necessity, method and sequence shall be chosen depending on the state and condition of current collector. The heat treatment method is preferable to be performed under the dry reductive, inert or vacuum environment, but it is not preferable under the humid or oxidative environment because it affects the surface of current collector. Depending on the surface impurities of current collector, the solvent used in the washing process may be selected from the group of ketone, alcohol, ether, alkane, cycloalkane, aromatics, cycloalcohol and halogen compounds. Preferably, one or the mixture of two or more solvents selected from the group consisting of aqueous solution, benzene, toluene, xylene, acetone, methylethylketone, diethylether, tetrahydrofuran, dioxane, dichloromethane, trichloromethane, tetrachloromethane, 1,1,1-trichloroethane, liquid alkane having a carbon number of 5 to 12 at ambient temperature, cyclohexane, cycloheptane, cyclopentanol, cyclohexanol, cyclohexanone, R₁CH₂OH and R₁CH₂CH(R₂)OH can be used, wherein, R₁ and R₂ are independently hydrogen or alkyl group having carbon number of 1 to 7. More preferably, it can be used that neutral aqueous solution, acetone, methanol, ethanol, propanol, diethylether, hexane, heptane, cyclohexane, cycloheptane, benzene, toluene, xylene, dichloromethane, trichloromethane, chloroform and trichloroethane.

Pure water and neutral buffer solution may be used as the neutral aqueous solution in the treatment step, and said pure water is the treated water to increase its purity such as distilled water, filtered water or filtered distilled water. When using the neutral aqueous solution such as the pure water without salt, the washing step may be omitted.

The following is the treatment method of aluminum for cathode current collector in the neutral aqueous solution.

Metallic aluminum is treated with the neutral aqueous solution of pH 7 at the temperature of 0 to 100°C for not more than an hour, washed with pure water and dried. When the treatment temperature is lower than 0°C, the reaction does not occur sufficiently, and when the treatment temperature is higher than 100°C or the treatment time is longer than an hour, its mechanical strength decreases owing to the excessive reaction into the aluminum inside. Said drying temperature preferably should be lower than the treatment temperature, but it may be higher temperature depending on the conditions. The aluminum current collector treated according to the above process has a larger surface area of 1 to 15m²/g compared to its initial surface area of 0.7 to 0.9m²/g.

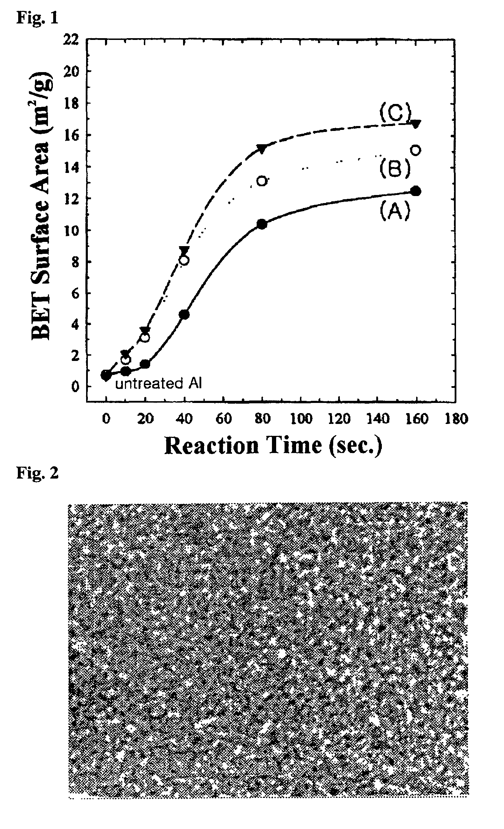

Figure 1 shows the surface characteristics of aluminum current collector at various treatment time according the above process. In Figure 1, (A) shows the result of using a neutral aqueous solution, (B) shows the result of using phosphoric acid aqueous solution of pH 4, and (C) shows the result of using KOH aqueous solution of pH 9. The treatment method related to Figure 1 shall be again mentioned in Example 1. Figure 2 shows the result from the scanning electron microscopy of the aluminum current collector treated with neutral aqueous solution. The black part is the reacted area and white part is the unreacted area. Therefore, from such experiment, it is certain that the surface area increases through the uniform reaction of whole surface of current collector according to the present invention.

The following is the treatment method of copper for anode current collector in the neutral aqueous solution.

Metallic copper is treated with the neutral aqueous solution of pH 7 at the temperature of 0 to 100°C, preferably 20 to 100°C, for not more than an hour, washed with pure water and dried. When the treatment temperature is lower than 0°C, the reaction does not occur sufficiently, and when the treatment temperature is higher than 100°C or the treatment time was longer than an hour, the mechanical strength decreases owing to the excessive reaction into the copper inside. Said drying temperature preferably should be lower than the treatment temperature, but it may be dried at higher temperature depending on the conditions. The copper current collector treated according to the above process has larger surface area of 0.3 to 10m²/g compared to its initial surface area of 0.1 to 0.2m²/g.

Regarding the reaction mechanism of aluminum in the neutral aqueous solution, 1mol of neutral water is dissociated to each H⁺ and OH⁻ of 10⁻⁷ mol at atmospheric temperature and the degree of dissociation shall increase at higher temperature. Aluminum in contact with the solution reacts with OH⁻ and is dissolved as form of a AlOOH (aluminum oxyhydroxide) or Al(OH)₃ (aluminum hydroxide), and consequently, the surface area increases, and the surface functional group of -Al(-OH)- or -Al(-OOH)-is formed on the surface, accordingly the adhesion property with active material layer increases. Also, the copper in contact with the solution reacts with OH⁻ and is dissolved as form of a Cu(OH)₂ (cupric hydroxide); consequently, the surface area increases, and the surface functional group of -Cu(-OH)- is formed on the surface, accordingly the adhesion property with the active material layer increases. That is, the localized dissolution of surface results in the increase of the surface area, and the suitable oxide layer on surface results in the enhanced adhesion property with active material layer.

Said aluminum and copper for current collector may be treated with the acidic or basic aqueous solution.

Regarding the treatment with acidic aqueous solution, metallic current collector is treated with acidic aqueous solution of pH 1 to 7, preferably pH 3 to 5, at the temperature of 20 to 80°C for not more than 10 min, washed with pure water and dried. When the treatment temperature is lower than 20°C, the reaction does not occur sufficiently, and when the treatment temperature is higher than 80°C or the treatment time is longer than 10 min, the mechanical strength may decrease owing to the excessive reaction into the metal inside. Said drying temperature preferably should be lower than treatment temperature, but it may be higher temperature depending on the conditions. The copper current collector treated according to the said process has much larger surface area of 0.9 to 13m²/g compared to its initial surface area of 0.09 to 0.11m²/g.

As the acidic aqueous solution, for example, one or the mixture of two or more acidic solutions selected from the group consisting of phosphoric acid, sulfuric acid, nitric acid, hydrochloric acid, acetic acid, carbonic acid, trifluoroacetic acid, oxalic acid, hydrofluoric acid, boric acid, hyperchloric acid, and hypochloric acid can be used. Among them, phosphoric acid, sulfuric acid, nitric acid and hydrochloric acid are more preferable. Lower temperature and shorter treatment time are preferable with stronger acidic solution.

Regarding the treatment of the basic aqueous solution, aluminum or copper current collector is treated with the basic aqueous solution of pH 7 to 14, preferably pH 9 to 11, at 20 to 90°C not more than 10 min, and washed with pure water, and dried. When the treatment temperature is lower than 20°C, the reaction does not occur sufficiently, and when the treatment temperature is higher than 90°C or the treatment time is longer than 10 min, the mechanical strength may decrease owing to the excessive reaction into the metal inside. Said drying temperature preferably should be lower than the treatment temperature, but it may be higher temperature depending on the conditions. The copper current collector treated according to the above process has much larger surface area of 1.4 to 15m²/g compared to its initial surface area of 0.09 to 0.1m²/g.

As the basic aqueous solution, for example, one or the mixture of two or more basic solutions selected from the group consisting of potassium hydroxide, sodium hydroxide, lithium hydroxide, and ammonia can be used. Among them, potassium hydroxide, sodium hydroxide, and lithium hydroxide are more preferable. Lower temperature and shorter treatment time are preferable with stronger basic solution.

The present invention particularly relates to the treatment method with the neutral aqueous solution. Comparing with the aqueous acidic or basic solution, the reaction in the neutral aqueous solution can be easily controlled under mild conditions. And, as mentioned above, the process can be simplified because the additional washing step is not necessary when using the neutral aqueous solution such as filtered water and distilled water without salt. For example, the treatment process can be completed by treating the metallic current collector with distilled water at 90°C for 5 min and drying between 80 to 100°C for 30 sec without additional washing step. Furthermore, it has a good advantage that it does not bring about the corrosion problem of equipments.

Comparing to the neutral aqueous solution, the acidic and basic aqueous solution may make the surface of current collector react excessively, therefore, they shall need the strict control of treatment conditions. That is, when using the acidic or basic aqueous solution, the excessive reaction results in larger surface area, however, it may result in the electrode deterioration owing to the excessive reaction into the metal inside and immoderate formation of surface oxide layer. Therefore, the neutral aqueous solution is rather preferable than the acidic and basic aqueous solution, and even if the severe reaction is necessary, it is preferable to use the neutral aqueous solution with intensive reaction conditions.

However, the acidic or basic aqueous solution may be preferable depending on the initial state of current collector, its usage, and the needs for battery performance. For example, the treatment in the acidic or basic aqueous solution may be used without the preceding impurity removal step such as the heat treatment or washing with solvent, and it may be compatible when less reaction time is necessary. However, the present invention shall not limit the treatment condition to particular one, which may be variable to each circumstance.

The present invention relates to the treated metallic current collector, preferably the aluminum and copper current collector which is coated with the conductive mixture layer. As mentioned above, the adhesion property shall be enhanced as the formation of surface oxide layer and the increase of surface area by said treatment process. However, it is more preferable to coat the conductive mixture slurry on the treated surface of the current collect to maintain its adhesion property and surface state during the repeated charge/discharge steps and long storage period because the volume of active material layer shall continuously change during the battery usage and long storage period, and the surface oxidation reaction of the metallic current collector may progress. That is, the surface state of metallic current collector may keep changing, and consequently, it may deteriorate the interfacial state between the current collector and the active material layer. Therefore, after said treatment process, it is preferable to form the conductive mixture layer which protects the metal surface and has the good adhesion property with the metal, no volume change and no reaction in the battery inside.

As one of said methods, the formation of conductive mixture layer between the metallic current collector and the active material layer shall protect the current collector and raise the interfacial adhesion property with the active material layer. The conductive mixture layer is comprised of polymer binders and conducting materials.

The general polymers can be used as the polymer binders, more preferably, it can be used one, or the mixture, or the copolymer of two or more selected from the group consisting of polyvinylidene difluoride, vinylidene difluoride - hexafluoropropylene copolymer, vinylidene difluoride - maleic anhydride copolymer, polyvinylchloride, polumethylmethacrylate, polymethacrylate, cellulose triacetate, polyurethane, polysulfone, polyether, polyethyleneoxide, polyisobutylene, polybutyldiene, polyvinylalcohol, polyacrylonitrile, polyimide, polyvinyl formal, acrylonitrilebutyldiene rubber, ethylene - propylene diene monomer, tetra(ethylene glycol) diacrylate, polydimethylsiloxane, ethylene - ethylacrylate compolymer, ethylene - vinylacetate copolymer, and polysilicone. Either aqueous or nonaqueous one can be used; however, it is necessary to select the polymer binder which is not dissolved or destroyed and has no volume change during the manufacturing process and in battery inside by its mechanical stability and chemical inactivity.

As the conducting materials, it is preferable to use the additive materials which are selected to increase a electrical conductivity of cathode/anode of the battery. Usually, the carbon materials are used as conducting materials. Among them, it is more preferable to use graphite, cokes, activated carbon and carbon black, and graphite and carbon black are the most preferable. Either natural or artificial one can be used. It shall be better to use a fine powder for more condensed layer, and the powder having a size less than 10µm is more preferable. To make the fine powder, the pulverization process such as milling may be done, if necessary.

The slurry for the conductive mixture layer is made by mixing said polymer binders and conducting materials. The mixing method of the polymer binders and the conducting materials can be selected suitably among the general methods. The present invention does not limit its method to particular one. Additionally, if necessary, the pulverization process such as milling may be done. It is preferable to select a mixing ratio of the polymer binders and conducting materials from the range of 2:8 to 9:1 based upon the dry weight of solid, and the range of 3:7 to 8:2 is more preferable.

To adjust the aiming viscosity, the suitable solvent (diluent) may be added to the slurry. Any kind of solvents can be used if the solvent can dissolve the polymer binders, and although the solvent does not dissolve the polymer binders, it may be used if it can disperse the polymer binders homogeneously. The solvent may be selected considering the drying condition and processibility of coated layer. For example, it is preferable to use one or the mixture of two or more selected from the group consisting of N-methylpyrrolidinone, dimethylformamide, dimethyacetamide, hexamethylphosphoramide, tetrahydrofurane, acetonitrile, cyclohexanone, chloroform, dichloromethane, dimethylsulfoxide, acetone, dioxane, and water. The diluted polymer binder may be used instead of adding the additional diluent. It is preferable to determine the slurry viscosity and the solid content in the suitable range depending on the formation method of coated layer and equipments. Usually, the solid content less than 40 wt. % based upon total weight of solid is preferable. Together with the polymer binders and conducting materials, the additives, which increase the adhesion property with aluminum and copper metal and stabilizing the coated layer, can be used, and its solid content shall be controlled below 20 wt. % based upon the total weight of solid.

The formation method of the coated layer can be suitably selected depending on its necessity, and the spray method, the dipping method and the bar method are preferable. However, the present invention does not limit the formation method of the coated layer to particular one. The final current collector is made by the drying process after forming the coated layer. The drying condition is selected from among the conditions that said solvents, which are included in the slurry, can be dried. And, the drying conditions may be changed depending upon the kinds of solvents. Usually, drying at the temperature of not more than 150°C is preferable and it is more preferable to dry at the temperature of not more than (boiling point of solvent + 20)°C for below 10 min. Any kind of drying method can be used such as the heat blow and radiation. However, the present invention does not limit the drying method to particular one.

Through said treatment process and coating the conductive mixture slurry, the internal resistance of the battery (specifically, interfacial resistance between active material layer and current collector) decreases, and the stability that the interface does not change during the usage or long storage period is obtained by virtue of the maintained surface state and the enhanced adhesion property between metallic current collector and active material layer.

Further, the present invention relates to the rechargeable battery, in particular, the rechargeable lithium battery in which the aluminum and copper treated according to said process are used for cathode and anode current collector. The usage of the untreated aluminum and copper for current collector is already disclosed; therefore, the aluminum and copper treated according to the present invention can be used in manufacturing the rechargeable batteries, in particular, rechargeable lithium batteries.

The electrode manufacturing process, that is, fabricating the active material layer on current collector treated according to the present invention, as mentioned above, is comprised of direct coating the mixed active materials slurry on the metallic current collector, or laminating or compressing the active material sheet onto the metallic current collector. Among them, the direct coating method with the slurry is more preferable because it can preserve the advantages of the present invention and the process can be simplified. However, the present invention shall not limit the electrode manufacturing process to particular one.

The following examples are presented as the treatment method of aluminum and copper current collector for rechargeable battery and the charge/discharge experiments using them. However, it will be understood that the present invention is not limited to these specific examples, but is susceptible to various modifications that will be recognized by the skilled person in the present invention.

### Treatment method of current collector

### EXAMPLE 1

Metallic aluminum and copper of 9mm x 10mm size were heated for 1 hour at 330°C to remove impurities, and they were dipped in respective bottle containing neutral, acidic or basic aqueous solution of 200ml and were reacted. After washing them with distilled water, they were dried at not more than 100°C. In case of using the distilled water as said neutral aqueous solution, the washing step was omitted. The surface areas of the treated aluminum and copper current collector were measured and their results were considered.

Depending upon the heat treatment time, composition and pH of treatment solution, and treatment time and temperature, and also, before and after treatment, the changes of surface area are described in Table 1.

**Table 1**

| Ex. | Metal | Heating condition | | Aqueous solution | | Treatment condition | | Surface area (m² /g) | |
|---|---|---|---|---|---|---|---|---|---|
| | | T(°C) | Time(hr) | Composition | pH | Time(sec) | T(°C) | Before | After |
| a | Al | 330 | 1 | Phosphoric acid | 4 | 40 | 40 | 0.08 | 8.3 |
| | Cu | 330 | 1 | Phosphoric acid | 4 | 60 | 40 | 0.11 | 7.1 |
| b | Al | 330 | 1 | KOH | 11 | 80 | 60 | 0.08 | 15.3 |
| | Cu | 330 | 1 | KOH | 11 | 160 | 60 | 0.11 | 14.1 |
| c | Al | 330 | 1 | Distilled water | 7 | 160 | 88 | 0.08 | 14.8 |
| | Cu | 330 | 1 | Distilled water | 7 | 200 | 88 | 0.11 | 8.5 |

In addition, separately from said example, the surface area characteristics depending on treatment time of the aluminum current collector at 80°C in aqueous solution are plotted in Figure 1. In Figure 1, (A) shows the result when using the neutral aqueous solution of pH 7, (B) shows the result when using the acidic aqueous solution of pH 4, and (C) shows the result when using the basic aqueous solution of pH 9. The surface area was calculated from the absorption amount of nitrogen gas based upon the BET (Brunaur-Emmett-Teller) method. Among them, Figure 2 shows the result from scanning electron microscopy of the aluminum current collector treated with the neutral aqueous solution (Ex. 1-c).

### EXAMPLE 2

Metallic aluminum and copper of 9mm x 10mm size were washed with solvent to remove impurities, and they were dipped in respective bottle containing neutral, acidic or basic aqueous solution of 200ml ,and were reacted. After washing them with distilled water, they were dried at not more than 100°C. In case of using the distilled water as said neutral aqueous solution, the washing step was omitted. The surface areas of the treated aluminum and copper current collector were measured, and their results were considered. Depending on the washing conditions, composition and pH of treatment solution, and treatment time and temperature, the characteristics of surface area are described in Table 2. Their characteristics before and after treatment were same with Example 1 in terms of the error range, therefore, they are not described again.

**Table 2**

| Ex. | Metal | Washing condition | | Drying condition | | Aqueous solution | | Treatment condition | |
|---|---|---|---|---|---|---|---|---|---|
| | | Solvent | Time (min) | Time (sec) | T(°C) | Composition | pH | Time (sec) | T(°C) |
| d | Al | Acetone | 30 | 30 | 70 | Phosphoric acid | 4 | 40 | 40 |
| | Cu | Acetone | 30 | 30 | 70 | Phosphoric acid | 4 | 60 | 40 |
| e | Al | Diethylether | 30 | 30 | 70 | KOH | 11 | 80 | 60 |
| | Cu | Diethylether | 30 | 30 | 70 | KOH | 11 | 160 | 60 |
| f | Al | Dichloromethane | 30 | 30 | 70 | Distilled water | 7 | 160 | 88 |
| | Cu | Dichloromethane | 30 | 30 | 70 | Distilled water | 7 | 200 | 88 |

### EXAMPLE 3

To form the conductive mixture layer on the aluminum and copper current collector treated according to said examples 1 and 2, the conductive mixture slurry was sprayed and dried at not more than 150°C. The conductive mixture slurry was made by mixing of the conductive material and the binder, and milling. To compare the performance before and after formation the conductive mixture layer, the internal resistance, in particular, the contact resistance was measured by AC impedance method. That is, as mentioned in following Example 4, after the half cell was made and analyzed by AC impedance method, the expected contact resistance was calculated by simulation.

Depending on the formation condition of the conductive mixture layer, the composition and manufacturing condition of slurry for the coated layer, and before and after coating, the contact resistance were described in Table 3.

**Table 3**

| Ex: | Ex. Before treatment | | Slurry for coated layer | | | drying | | Contact resistance(Ω) | |
|---|---|---|---|---|---|---|---|---|---|
| | | Metal | Conducting material (50 wt%) | Polymer Binder (50 wt%) | Solid Content (%) | Time (sec) | T(°C) | before | After |
| g | 1-a | Al | Super P | PVdF | 5 | 10 | 100 | 6.1 | 3.3 |
| | | Cu | Super P | PVdF | 5 | 10 | 100 | 3.6 | 2.0 |
| h | 1-b | Al | Super P | PVdF | 5 | 10 | 100 | 5.5 | 2.9 |
| | | Cu | Super P | PVdF | 5 | 10 | 100 | 2.4 | 1.4 |
| i | 1-c | Al | Super P | PVdF | 5 | 10 | 100 | 5.2 | 2.1 |
| | | Cu | Super P | PVdF | 5 | 10 | 100 | 2.2 | 1.3 |
| j | 1-c | Al | Super P | EEA | 6 | 10 | 90 | 5.2 | 1.9 |
| | | Cu | Super P | EEA | 6 | 10 | 90 | 2.2 | 1.3 |
| k | 1-c | Al | Ketjen Black | PVdF | 4 | 10 | 100 | 5.2 | 3.0 |
| | | Cu | Ketjen Black | PVdF | 4 | 10 | 100 | 2.2 | 1.8 |
| l | 1-c | Al | Graphite | PVdF | 7 | 10 | 100 | 5.2 | 2.5 |
| | | Cu | Graphite | PVdF | 7 | 10 | 100 | 2.2 | 1.8 |
| m | 1-c | Al | Graphite | EEA | 8 | 10 | 90 | 5.2 | 1.4 |
| | | Cu | Graphite | EEA | 8 | 10 | 90 | 2.2 | 1.0 |
| n | 2-d | Al | Super P | PVdF | 5 | 10 | 100 | 5.4 | 2.8 |
| | | Cu | Super P | PVdF | 5 | 10 | 100 | 2.3 | 1.7 |
| o | 2-e | Al | Super P | PVdF | 5 | 10 | 100 | 5.3 | 2.6 |
| | | Cu | Super P | PVdF | 5 | 10 | 100 | 2.0 | 1.6 |
| p | 2-f | Al | Super P | PVdF | 5 | 10 | 100 | 5.0 | 1.9 |
| | | Cu | Super P | PVdF | 5 | 10 | 100 | 1.9 | 1.0 |
| q | 2-f | Al | Super P | EEA | 6 | 10 | 90 | 5.0 | 1.9 |
| | | Cu | Super P | EEA | 6 | 10 | 90 | 1.9 | 1.0 |
| r | 2-f | Al | Ketjen Black | PVdF | 4 | 10 | 100 | 5.0 | 2.5 |
| | | Cu | Ketjen Black | PVdF | 4 | 10 | 100 | 1.9 | 1.2 |
| s | 2-f | Al | Graphite | PVdF | 7 | 10 | 100 | 5.0 | 3.1 |
| | | Cu | Graphite | PVdF | 7 | 10 | 100 | 1.9 | 1.4 |
| t | 2-f | Al | Graphite | EEA | 8 | 10 | 90 | 5.0 | 1.4 |
| | | Cu | Graphite | EEA | 8 | 10 | 90 | 1.9 | 1.0 |

By means of formation of the conductive mixture layer, the contact resistance of half cells decreased in both case of aluminum and copper current collector both. This result came from the enhanced adhesion property between the metallic current collector and the active material layer of electrode by forming the conductive mixture layer.

### Charge/discharge experiment when the current collectors are used for rechargeable lithium battery

### EXAMPLE 4

In manufacturing the cathode and anode electrode, the active material, the conducting material (Cabot, Vulcan XC-72) and the binder (Atochem, Kynar 2801) were mixed and made to slurry, and the mixed slurry was coated on each of the metallic current collectors before and after treatment. Then, the half cell was fabricated, in which the working electrode was made by said method and the counter electrode was lithium metal, and electrolyte was made by dissolving the LiBF₄(1M concentration) in the mixed solution (volume ratio of 1:1) of ethylene carbonate and dimethyl carbonate. The internal resistance of the cell made by said method was measured by the AC impedance method, and the relative capacity was measured with repeated charge/discharge cycling. The relative capacity means the percentage ratio of the discharge capacity at specific cycle to the initial first discharge capacity of the cell.

The examples of treatment method of the current collector, the kind of active material, figure expression and references are described in Table 4.

**Table 4.**

| Ex. | Treatment Ex. | Metal Metal | Active material of Working electrode | Figure expression | Reference |
|---|---|---|---|---|---|
| u | - | Al | LiMn₂O₄ | Figure 3(D) | untreated, comparative exam. |
| v | 1-c | Al | LiMn₂O₄ | Figure 3(E) | treated (neutral solution) |
| w | 2-f | Al | LiMn ₂O₄ | - | treated (neutral solution) |
| x | 3-i | Al | LiMn₂O₄ | Figure 3(F) | treated (neutral solution), coated layer |
| y | - | Cu | Graphite | Figure 4(G) | untreated, comparative exam. |
| z | 1-a | Cu | Graphite | Figure 4(H) | treated (neutral solution) |
| aa | 2-d | Cu | Graphite | - | treated (neutral solution) |
| bb | 3-g | Cu | Graphite | Figure 4(I) | treated (neutral solution), coated layer |

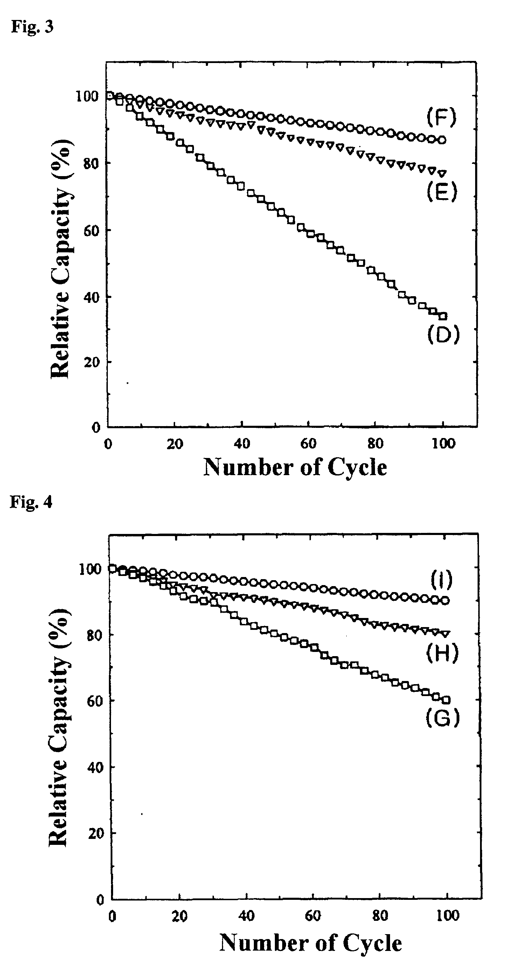

From the results of charge/discharge performance of the half cell made by this example, the treated current collector according to Examples 1 and 2 showed the similar change of discharge capacity when the same metal was treated by the same method and the same conductive mixture layer was formed on it. So, they are not described in Figures 3 and 4 (for example, Ex. v and w, Ex z and aa).

Even if the relative capacity decreased with increasing cycle number, the capacity decrease of the cell using the treated current collectors was much less than the capacity of the cell using the untreated current collectors, and the cell using the treated current collectors on which conductive mixture layer was formed was the most preferable. The reason of this result is assumed that the formation of conductive mixture layer between the metallic current collector and the active material layer protects the surface of the current collector and enhances the interfacial adhesion property with the active material layer.

### INDUSTRIAL APPLICABILITY

Therefore, the aluminum and copper current collector, which is made by such treatment method, or such treatment and formation of the conductive mixture layer, has the larger surface area and the excellent electrode processibility, and its surface is protected and the adhesion property with the active material layer is enhanced. Consequently, the electrode maintains its shape in spite of severe volume change during repeated charge/discharge step, and the interfacial state between the metallic current collector and the active material layer is stabilized. The enhanced adhesion property shall make the process efficiency and the manufacturing yield increase in battery manufacturing process. Additionally, the dimensional stability during charge/discharge cycling means the long lasting and stable pathway for electron in electrochemical reaction; therefore, the rechargeable lithium battery can be manufactured having a excellent charge/discharge characteristic and superior performances.

## Claims

1. A treatment method of metallic current collector for rechargeable battery, wherein the metallic current collector is treated with neutral aqueous solution at the temperature of between 0 to 100°C for not more than an hour, or is treated with acidic aqueous solution between 20 to 80°C, or basic aqueous solution between 20 to 90°C for not more than 10 min, and washed with pure water, and dried.

2. A treatment method of metallic current collector for rechargeable battery, wherein the metallic current collector is treated with pure water between 0 to 100°C for not more than an hour, and dried.

3. The treatment method according to claim 1 or 2, wherein the conductive mixture slurry is coated on said treated metallic current collector.

4. The treatment method according to one of claims 1 to 3, wherein the surface impurity of metallic current collector is removed by heating between 100 to 400°C for not more than 4 hour, or washing with solvent prior to said treatment.

5. The treatment method according to claim 4, wherein said metal is aluminum for cathode current collector, or copper for anode current collector of rechargeable lithium battery; said solvent is one or the mixture of two or more selected from the group consisting of aqueous solution, benzene, toluene, xylene, acetone, methylethylketone, diethylether, tetrahydrofuran, dioxane, dichloromethane, trichloromethane, chloroform, tetrachloromethane, trichloroethane, alkane having a carbon number of 5 to 12, cyclohexane, cycloheptane, cyclopentanol, cyclohexanol, cyclohexanone, R₁CH₂OH and R₁CH₂CH(R₂)OH, wherein R₁ and R₂ are independently hydrogen or alkyl group having carbon number of 1 to 7; said acidic aqueous solution is one or the mixture of two or more from the group consisting of hydrochloric acid, phosphoric acid, sulfuric acid, nitric acid, acetic acid, carbonic acid, trifluoroacetic acid, oxalic acid, hydrofluoric acid, boric acid, hyperchloric acid and hypochloric acid; said basic aqueous solution is one or the mixture of two or more from the group consisting of potassium hydroxide, sodium hydroxide, lithium hydroxide, and ammonia; said conductive mixture slurry coated on the treated metallic current collector is the conductive mixture layer.

6. The treatment method according to claim 5, wherein said conductive mixture layer is comprised of the mixtures of polymer binder and conducting material, and said polymer binder is stable during battery manufacturing process and does not bring about reaction in the battery inside after manufacturing.

7. A treatment method according to claim 6, wherein said polymer binder is one, or the mixture, or the copolymer of two or more selected from the group consisting of polyvinylidene difluoride, vinylidene difluoride - hexafluoropropylene copolymer, vinylidene difluoride - maleic anhydride copolymer, polyvinylchloride, polymethylmethacrylate, polymethacrylate, cellulose triacetate, polyurethane, polysulfone, polyether, polyethyleneoxide, polyisobutylene, polybutyldiene, polyvinylalcohol, polyacrylonitrile, polyimide, polyvinyl formal, acrylonitrile butyldiene rubber, ethylene - propylene diene monomer, tetra(ethylene glycol) diacrylate, polydimethylsiloxane, ethylene - ethylacrylate copolymer, ethylene - vinylacetate copolymer, and polysilicone; said conducting material is one or the mixture of two or more selected from the group consisting of graphite, cokes, activated carbon, and carbon black; the solid content is not more than 40 wt. % based upon the total weight of conductive mixture slurry, and the content of conducting material is 10 to 80 wt. % based upon the total solid of said conductive mixture slurry.

8. The rechargeable lithium battery wherein the aluminum and copper, which are treated by the method according to one of claims 1 to claim 7, are used for the cathode current collector and the anode current collector respectively.
